# EUROPEAN PATENT APPLICATION

(11) **EP 3 954 909 A2**
(43) Date of publication of application: **16.02.2022**
(21) Application number: 20787660.8
(22) Date of filing: 10.06.2020
(51) Int. Cl.: F16B 5/07, F16B 5/00

(54) **ASSEMBLY STRUCTURE**

(30) Priority: 11.04.2019 CN 201910289731; 11.04.2019 CN 201920489137 U
(71) Applicant: Deng, Xulin, Shanghai 200083 (CN)
(72) Inventor: DENG, Xuesong, Urumqi, Xinjiang 830000 (CN); DENG, Xulin, Shanghai 200083 (CN)
(74) Representative: Stellbrink & Partner Patentanwälte mbB
(86) International application number: PCT/CN2020/095299
(87) International publication number: WO 2020/207511

(57) **Abstract**

Disclosed is an assembly structure comprising multiple assembly units that are connected to one another. Side edges of adjacent assembly units opposite one another are connected by insertion by means of an insertion groove and an insertion panel. A side edge has two end faces connected to the adjacent side edge and a circumferential surface connected to the two end faces, and the insertion direction is the direction of the circumferential surface that faces the side edge of the assembly unit. By means of insertion and by limiting the insertion direction to be a direction of the circumferential surface facing the side edge, i.e. when adjacent assembly units are connected by insertion, other assembly units are not affected, thereby enabling simple assembly of any assembly units. Using said method, during the connection by insertion, an operator only needs to bear the frictional force between the side surfaces during insertion, thereby substantially reducing installation difficulty.

## Description

This application claims the priority to Chinese Patent Application No. 201910289731.5, titled "ASSEMBLY STRUCTURE", filed with the China National Intellectual Property Administration on April 11, 2019, and Chinese Patent Application No. 201920489137.6, titled "ASSEMBLY STRUCTURE", filed with the China National Intellectual Property Administration on April 11, 2019, the entire disclosures of which are incorporated herein by reference.

### FIELD

The present application relates to the technical field of structural connection, and in particular to a splice structure.

### BACKGROUND

For toys, furniture, building or decorative structures formed by splicing, adjacent splice units are currently connected by the sliding fit. That is, splice units are placed in position, and by rotating one of the splice units, all the splice units can be connected to one another through the sliding fit. Specifically, for the conventional splice units, the splicing direction is that, inserting along the extending direction of the lateral side of the splice unit, which is, inserting from a direction toward an end of the lateral side.

However, in actual operation, for multiple splice units, due to the huge number of splice units and the existence of friction, it is difficult to connect all the splice units together by rotating only one splice unit, which makes the splicing process laborious.

Therefore, a technical problem to be solved by those skilled in the art is to provide a splice structure to reduce the difficulty of splicing.

### SUMMARY

In view of this, an object of the present application is to provide a splice structure to reduce the difficulty of splicing.

In order to achieve the above object, the following technical solutions are provided according to the present application.

A splice structure includes multiple splice units that are connected to one another, wherein corresponding lateral sides of adjacent splice units are in a plug-in connection with each other via a plug-in groove and a plug-in plate, and one of the corresponding lateral sides has an end face connected to the other one of the corresponding lateral sides and a peripheral face connected to the end face; a plug-in direction is a direction toward the peripheral face of the lateral side of the splice unit.

Preferably, in the above splice structure, the splice unit is a planar structure, and the plug-in direction is perpendicular to the peripheral face of the splice unit; or, the splice unit is a planar structure, and an included angle between the plug-in direction and the peripheral face of the splice unit is an acute angle.

Preferably, in the above splice structure, the peripheral face of the lateral side of the splice unit is an arc surface, and the plug-in direction is along a tangential direction of the lateral side.

Preferably, in the above splice structure, the lateral side of the splice unit is a spherical surface, and the plug-in direction is along a tangential direction of the peripheral face of the lateral side.

Preferably, in the above splice structure, opposite surfaces of the plug-in groove and the plug-in plate are both corrugated surfaces.

Preferably, the above splice structure further includes a blocking member for preventing the each two of the splice units that are in a plug-in connection from being disengaged from each other.

Preferably, in the above splice structure, the blocking member is a buckle or a protrusion, and the blocking member is located at an end of a side surface of the plug-in groove which is proximate to a groove bottom, or an end of the plug-in plate which is proximate close to a free end.

Preferably, in the above splice structure, the splice unit is inserted into the adjacent splice unit from an outer side; or the splice unit is inserted from an inner side to an outer side of the adjacent splice unit.

Preferably, in the above splice structure, one end of the splice unit is inserted into the adjacent splice unit from an inner side, and another end of the splice unit is inserted from an outer side of the adjacent splice unit.

Preferably, in the above splice structure, the plug-in groove is a hinge fixed on the lateral side of the splice unit.

Preferably, in the above splice structure, the splice unit is a polygonal frame structure.

Preferably, in the above splice structure, the corresponding lateral sides of the splice units are hinged by a hinge.

It can be seen from the above technical solutions that the splice structure provided according to the present application includes multiple splice units that are connected to one another, where corresponding lateral sides of adjacent splice units are in a plug-in connection with each other via a plug-in groove and a plug-in plate, and a plug-in direction is a direction toward the peripheral face of the lateral side of the corresponding splice unit. By adopting the plug-in connection manner, and limiting the plug-in direction to the direction facing the peripheral face of the lateral side, that is, when being connected by the plug-in connection, the adjacent splice units will not be affected by other splice units, thus simple splicing of any splice units is realized. With this manner, an operator only needs to bear the friction between side surfaces during the plug-in connection process. Therefore, the installation difficulty is greatly reduced.

### BRIEF DESCRIPTION OF THE DRAWINGS

For more clearly illustrating embodiments of the present application or the technical solutions in the conventional technology, drawings referred to for describing the embodiments or the conventional technology will be briefly described hereinafter. Apparently, drawings in the following description are only examples of the present application, and for the person skilled in the art, other drawings may be obtained based on the provided drawings without any creative efforts.
Figure 1 is a schematic view showing the assembly of a splice structure according to an embodiment of the present application which employs ordinary splicing ;
Figure 2 is a schematic view showing the structure of a splice structure according to an embodiment of the present application which employs splicing of corrugated surfaces;
Figure 3 is a view taken along direction AA in Figure 2;
Figure 4 is a schematic structural view showing a splice unit having a corrugated surface according to an embodiment of the present application;
Figure 5 is a view taken along a direction FF in Figure 4;
Figure 6 is an enlarged view of portion E in Figure 5;
Figure 7 is an enlarged view of portion D in Figure 5;
Figure 8 is a schematic view showing an assembly employing splicing from an outer side with a protrusion for limitation according to an embodiment of the present application;
Figure 9 is a schematic view showing an assembly employing splicing from an inner side with a protrusion for limitation according to an embodiment of the present application;
Figure 10 is a schematic view showing an assembly employing a combination of splicing from an outer side with a protrusion for limitation and splicing from an inner side with a protrusion for limitation according to an embodiment of the present application;
Figure 11 is a schematic view showing an assembly employing splicing from an outer side with a buckle according to an embodiment of the present application;
Figure 12 is a schematic view showing an assembly employing splicing from an inner side with a buckle according to an embodiment of the present application;
Figure 13 is a schematic view showing an assembly employing a combination of splicing from an outer side with a buckle and splicing from an inner side with a buckle according to an embodiment of the present application;
Figure 14 is a schematic structural view showing a splice structure spliced by a hinge according to an embodiment of the present application;
Figure 15 is a view taken along direction BB in Figure 14;
Figure 16 is a schematic structural view showing a splice unit with a hinge according to an embodiment of the present application;
Figure 17 is an enlarged view of portion L in Figure 16;
Figure 18 is a top view of the splice unit with the hinge according to the embodiment of the present application;
Figure 19 is a view taken along direction CC in Figure 17;
Figure 20 is an enlarged view of portion G in Figure 18;
Figure 21 is an enlarged view of portion H in Figure 18;
Figure 22 is a schematic view showing an assembly employing splicing from the outer side and connecting by the hinge according to an embodiment of the present application;
Figure 23 is a schematic view showing an assembly employing splicing from the inner side and connecting by the hinge according to an embodiment of the present application;
Figure 24 is a schematic view showing an assembly employing a combination of splicing from the outer side and splicing from the inner side with connection by the hinge according to an embodiment of the present application.

### DETAILED DESCRIPTION OF THE EMBODIMENTS

In view of this, a core of the present application is to provide a splice structure to reduce the difficulty of splicing.

For those skilled in the art to better understand the solution of the present application, the present application will be further described in detail hereinafter in conjunction with the accompanying drawings and specific embodiments.

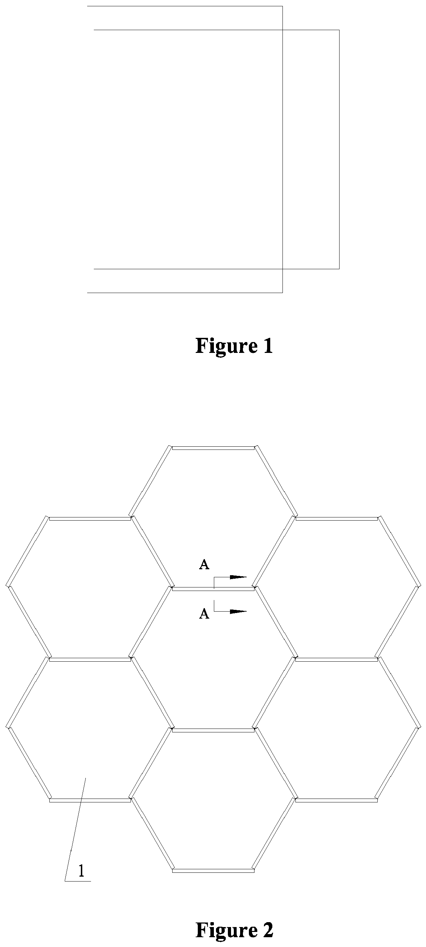

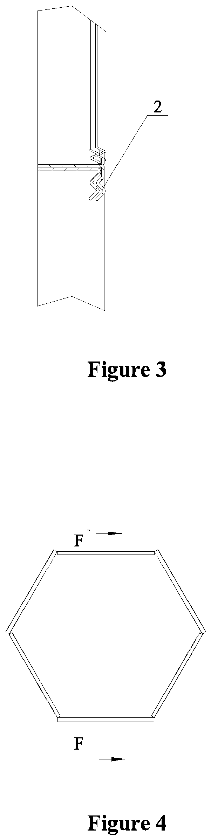

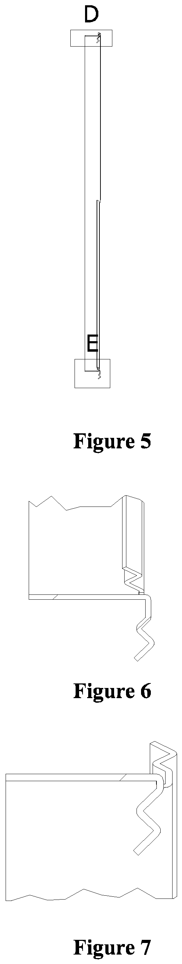

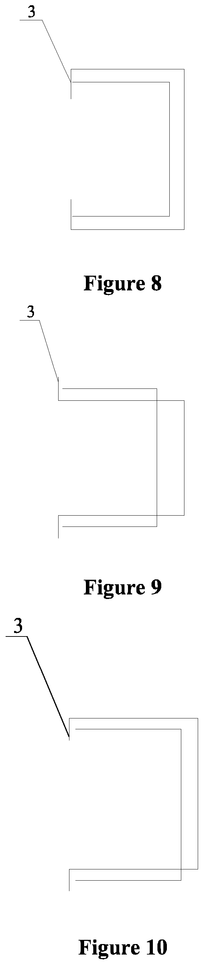

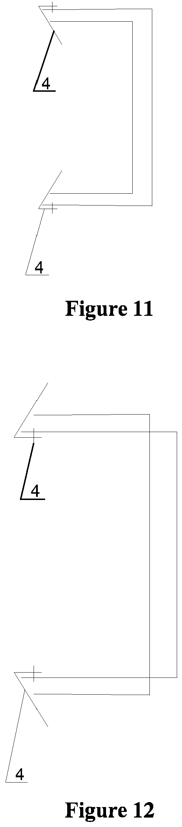

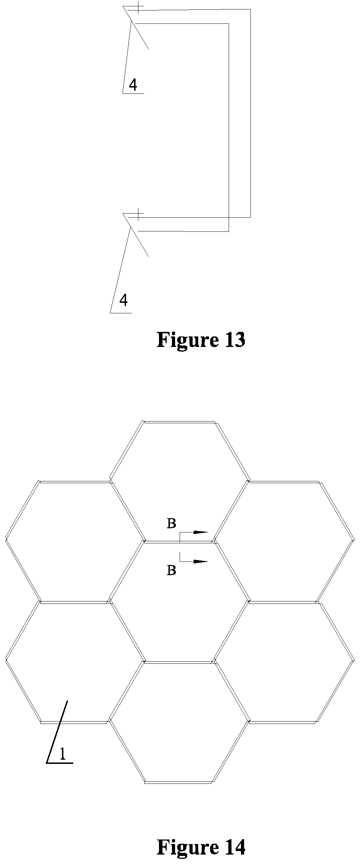

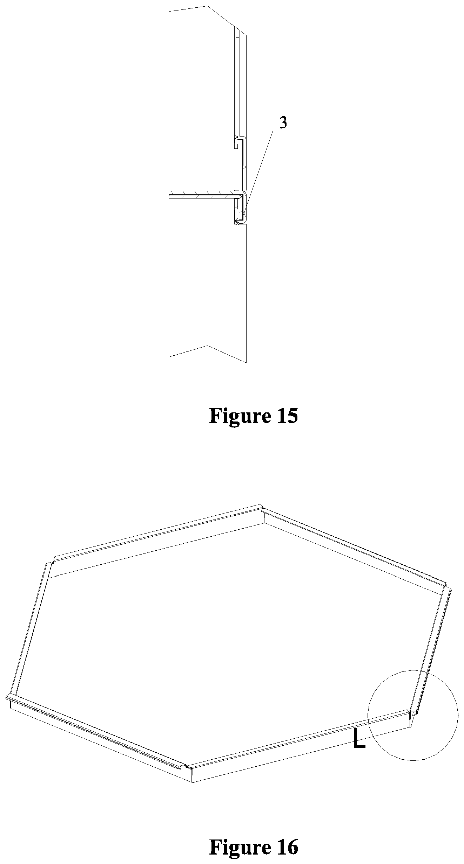

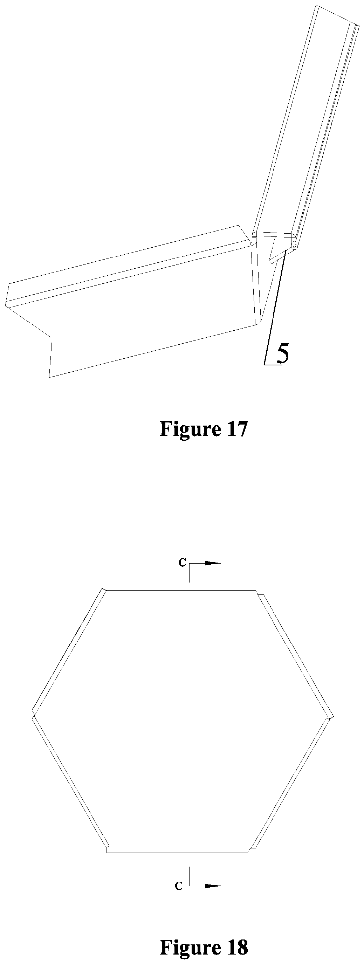

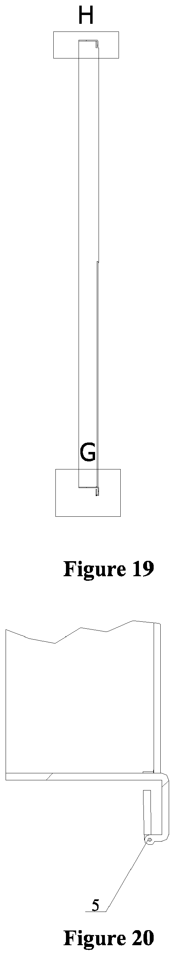

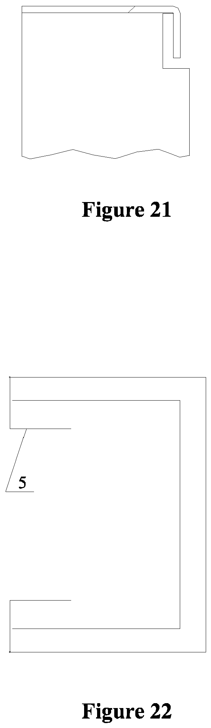

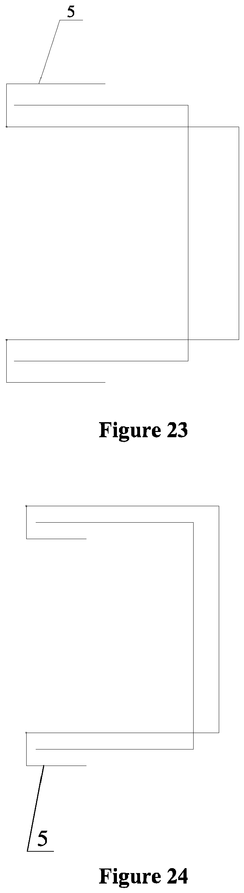

As shown in Figure 1 to Figure 24, a splice structure is provided according to the present application, including multiple splice units 1 that are connected to one another. Corresponding lateral sides of adjacent splice units 1 are in a plug-in connection with each other via a plug-in groove and a plug-in plate, and a plug-in direction is a direction toward a peripheral face of the lateral side of the splice unit 1. Specifically, in the present application, a surface of the lateral side, connected to a corresponding lateral side of the adjacent splice unit, is an end face; a surface connected to the end face is a peripheral face. A case that both the corresponding lateral sides are of a cuboid structure is taken as an example, end faces are two surfaces, connected to each other, of two adjacent cuboids, and peripheral faces are four surfaces perpendicular to the two end faces. The plug-in direction in the present application may be a direction which has an arbitrary angle with respect to the peripheral face, and the lateral side may be in any shape. By adopting the plug-in connection manner, and limiting the plug-in direction to a direction toward the peripheral face of the lateral side, when being connected in the plug-in connection manner, the adjacent splice units will not be affected by other splice units 1, thus simple splicing of any splice unit 1 is realized. In this way, an operator only needs to bear the friction between side surfaces during the plug-in connection process. Thus, the installation difficulty is greatly reduced.

In case that the splice unit 1 in the present application is a planar structure, the splicing direction is perpendicular to the peripheral face of the splice unit 1. Specifically, the plug-in connection may be realized in a manner that the adjacent splice units are connected by inserting along a height direction, or in a direction parallel to a plane where the splice unit 1 is located and perpendicular to the peripheral face. Alternatively, an included angle between the plug-in direction and the peripheral face of the splice unit 1 may be an acute angle, that is, the plug-in connection is realized by inserting obliquely to the peripheral face.

In addition, in case that the splice unit 1 is a planar structure, the plug-in direction may also be along the plane of the splice unit 1. That is, adjacent splice units get close to each other on the same horizontal plane to realize the plug-in connection. In the above plug-in connection manner, a U-shaped groove facing the plug-in direction is required to be formed on the lateral side of the splice unit 1. In addition, in case that the splice unit 1 is a planar structure, an included angle between the plug-in direction and the plane of the splice unit may be an acute angle. That is, the plug-in direction is inclined with respect to the vertical plane. With this arrangement, the splice units may be spliced into a structure which is not in one plane, such as a trapezoidal or parallelogram structure. A magnitude of the acute angle may be set according to different requirements, and which all fall within the scope of protection. Furthermore, the lateral side of the splice unit 1 can be inserted from both upper and lower sides of a plug-in connection surface, that is, bilateral plug-in connection, or multilateral plug-in connection. Unilateral plug-in connection may also be employed. In a thickness direction of the splice unit 1, both upper and lower ends of the lateral side are provided with plug-in structures to realize bilateral and multilateral plug-in connections, so that the stability of the plug-in connection is improved.

In a further embodiment, the peripheral face of the lateral side of the splice unit is an arc surface, and the plug-in direction is along the tangential direction of the lateral side. With this arrangement, the splice units may be spliced into an arc surface structure or other curved surface structure to satisfy different needs. In addition, in a case the lateral side of the splice unit is a spherical surface, that is, the lateral side is an arc surface structure along both the length direction and the thickness direction, the plug-in direction may be embodied as a tangential direction of the peripheral face of the lateral side.

Only several shapes of the lateral side of the splice unit are disclosed herein. In practice, the shape may be arranged according to different requirements. The key point is that the plug-in direction is toward the peripheral face of the lateral side, so as to ensure direct splicing between adjacent splice units, thus simplifying the splicing.

In case that the splice units 1 are embodied as a toy, the requirement of stability of the plug-in connection is relatively low. Therefore, during splicing of the splice units 1, the connection can be realized only by means of plug-in. However, in case that the splice units 1 are embodied as a fixture or other structures requiring high stability, the stability after splicing is required to be increased. Therefore, the plug-in surface of the splice unit 1 in the present application is embodied as the corrugated surface 2, which is used to increase the friction after splicing, thus improving the stability of connection, as shown in Figure 2 to Figure 7.

In a further embodiment, in order to further prevent the splice units 1 from being disengaged from each other after being spliced, a blocking member is provided in the present application to prevent the splice units 1 from being disengaged after the splicing. The arrangement of the blocking member can prevent the lateral side of the splice unit 1 from being easily disengaged, thereby ensuring the stability after splicing.

In a specific embodiment, the above blocking member may be a buckle 4 or a protrusion 3. Specifically, the blocking member is located at an end of a side surface of the plug-in groove which is proximate to a groove bottom, or an end of the plug-in plate which is proximate to a free end thereof. With this arrangement, after the plug-in plate is inserted into the plug-in groove, the plug-in plate can be restricted by the buckle or the protrusion, thus preventing the plug-in plate and the plug-in groove from being separated. During operation, corresponding lateral sides of the splice units 1 are buckled together after splicing, or the lateral side inserted into the splice unit 1 is blocked by the protrusion 3, which ensures the stability after splicing. In practice, inward buckling or outward buckling can be adopted, or one end is buckled inward and the other end is buckled outward.

In a further embodiment, the above splice unit 1 is inserted into the adjacent splice unit from an outer side, or the splice unit 1 is inserted from an inner side to an outer side of the adjacent splice unit, or one end of the splice unit 1 is inserted into the adjacent splice unit from the outer side, and the other end of the splice unit 1 is inserted from the inner side to the outer side of the another adjacent splice unit. The plug-in connection manners of the adjacent splice units are described in detail herein. In practice, the plug-in connection manner may be selected according to different requirements.

On the basis of the above technical solutions, the plug-in groove disclosed in the present application may be a hinge fixed on the lateral side of the splice unit. That is, the hinge is fixed on the lateral side of the splice unit 1 and turned over and is fixed on the lateral side, so that two hinges form the plug-in groove. In practice, the plug-in groove may also be directly processed on the lateral side of the splice unit 1.

Those skilled in the art can understand that, in practice, different connection manners may be selected according to different stability requirements, and all of them shall fall within the scope of protection.

Preferably, the splice unit 1 disclosed in the present application is a polygonal frame structure. Specifically, the splice unit 1 may be a triangle, a pentagon, a hexagon, etc., which may be selected according to different requirements. By employing the frame structure, the weight of the splice unit 1 can be further reduced, and thus the material and cost can be reduced. Or, the splice unit may be an irregular-shaped structure of which the splicing part is the frame structure, and the unstressed edges may be opened instead of the frame type. Preferably, in the above splice structure, corresponding lateral sides of the adjacent splice units 1 are hinged by the hinge. Only one manner for forming the splice unit is provided herein, which may also be set according to other requirements in practice, and all fall within the scope of protection.

The above embodiments are described in a progressive manner. Each of the embodiments is mainly focused on describing its differences from other embodiments, and reference may be made among these embodiments with respect to the same or similar parts.

The above illustration of the disclosed embodiments can enable those skilled in the art to implement or use the present application. Various modifications to the embodiments are apparent to the person skilled in the art, and the general principle herein can be implemented in other embodiments without departing from the spirit or scope of the present application. Therefore, the present application is not limited to the embodiments described herein, but should be in accordance with the broadest scope consistent with the principle and novel features disclosed herein.

## Claims

1. A splice structure, comprising a plurality of splice units (1) that are connected to one another, wherein
corresponding lateral sides of adjacent splice units (1) are in a plug-in connection with each other via a plug-in groove and a plug-in plate, and one of the corresponding lateral sides has an end face connected to the other one of the corresponding lateral sides and a peripheral face connected to the end face; wherein a plug-in direction is a direction toward the peripheral face of the lateral side of each of the splice units (1).

2. The splice structure according to claim 1, wherein
the splice unit is a planar structure, and the plug-in direction is perpendicular to the peripheral face of the splice unit (1); or,
the splice unit is a planar structure, and an included angle between the plug-in direction and the peripheral face of the splice unit (1) is an acute angle.

3. The splice structure according to claim 1, wherein the peripheral face of the lateral side of the splice unit (1) is an arc surface, and the plug-in direction is along a tangential direction of the lateral side.

4. The splice structure according to claim 1, wherein the lateral side of the splice unit (1) is a spherical surface, and the plug-in direction is along a tangential direction of the peripheral face of the lateral side.

5. The splice structure according to claim 1, wherein opposite surfaces of the plug-in groove and the plug-in plate are both corrugated surfaces.

6. The splice structure according to claim 1, further comprising a blocking member configured for preventing each two of the splice units (1) that are in a plug-in connection from being disengaged from each other.

7. The splice structure according to claim 6, wherein the blocking member is a buckle (4) or a protrusion (3), and the blocking member is located at an end of a side surface of the plug-in groove which is proximate to a groove bottom, or an end of the plug-in plate which is proximate to a free end thereof.

8. The splice structure according to any one of claims 1 to 7, wherein
the splice unit (1) is inserted into the adjacent splice unit from an outer side; or
the splice unit (1) is inserted from an inner side to an outer side of the adjacent splice unit.

9. The splice structure according to any one of claims 1 to 7, wherein one end of the splice unit (1) is inserted into the adjacent splice unit from an inner side, and another end of the splice unit (1) is inserted from an outer side of the adjacent splice unit.

10. The splice structure according to claim 1, wherein the plug-in groove is a hinge fixed on the lateral side of the splice unit (1).

11. The splice structure according to claim 1, wherein the splice unit (1) is a polygonal frame structure.

12. The splice structure according to claim 1, wherein the corresponding lateral sides of the splice units are hinged by a hinge.
